# EUROPEAN PATENT SPECIFICATION

(11) **EP 2 253 255 B1**
(45) Date of publication and mention of the grant of the patent: **24.02.2016**
(21) Application number: 09734787.6
(22) Date of filing: 01.04.2009
(51) Int. Cl.: A47J 43/044, B02C 18/10

(54) **SMALL FOOD CHOPPER**
KLEINES LEBENSMITTELSCHNEIDEGERÄT
PETIT HACHOIR POUR ALIMENT

(30) Priority: 22.04.2008 CN 200820093531 U
(43) Date of publication of application: 24.11.2010
(73) Proprietor: Wong, Yan Kwong, Kowloon Bay Kowloon, Hong Kong (CN)
(72) Inventor: Wong, Yan Kwong, Kowloon Bay Kowloon, Hong Kong (CN)
(74) Representative: Cayli, Hülya
(86) International application number: PCT/CN2009/071121
(87) International publication number: WO 2009/129714

(56) References cited:
- CN-Y- 2 242 068
- CN-Y- 2 281 138
- CN-Y- 2 730 477
- CN-Y- 200 970 159
- CN-Y- 201 182 529
- GB-A- 2 314 786
- GB-A- 2 327 864
- US-A- 4 854 718
- US-A- 5 156 084
- US-A- 6 035 771
- US-A1- 2004 159 727
- US-A1- 2004 159 727

## Description

### Background of the Invention

This application is a European national stage of PCT application PCT/CN2009/071121, filed on April 1, 2009 which claims priority of Chinese application No. 200820093531.X, filed on April 22, 2008.

### Field of the Invention

This invention is a kitchen apparatus. Specifically, it is a small food chopper.

### Description of Prior Art

Food choppers are widely used in the kitchen. People use food choppers to smash food, especially to cut fruit and vegetable to small desirable pieces so that people can do further processing or simply eat. Currently, there are many types of food processor on the market. Most products use manually rotating knobs to drive shafts with blade in the end, so that the blades can spin and achieve food chopping. However, these food processors are usually pretty complex in structure. When a larger driving ratio is required, the rotating knob that is on the center of the cover is usually very large. Thus the manufacturing of the cover is not convenient. Besides, the resistance imposed on the food is not strong enough. Thus, the chopping effect is limited.

In the published patent document No. GB2327864A, a manual or hand operated food processor is disclosed. Said food processor comprises a bowl and a dome shaped lid which fits over and engages the bowl. The lid comprises a floor and a dome shaped roof and there is provided a handle arm and a handle knob on the roof of the lid. The processor further comprises a drive handle shaft sitting in a socket on the floor and protruding through a hole in the roof, a drive handle gear being present in the lower end of the shaft, a spur gear wheel being present at the center of the floor of the lid and being in connection with the drive handle gear, a central gear shaft being present in a hole at the center of the floor, engaged to the spur gear wheel and having a polygonal lower end portion, a blade carrier having a hole at the center in which the lower end portion of the central gear shaft is engaged and having an enclosed slot into which a number of blade tools is placed. By rotation of the handle arm the slicing, cutting or chopping of the foodstuffs is ensured.
Another example for food processors is given in the patent document No US4854718A of the state of the art. In document US4854718A, an improved manual blender for domestic usage which comprises a cylindrical vessel body, a lid suitable for closing the space defined by the vessel body including a circular plate, a masher means being able to rotate in the vessel body, a spinning means driving said masher means and a knob (34), is disclosed. The spinning means of said document comprises a disc to which the knob rotatably connected and a circumferential wall with annular gear circumferentially formed in the inner side wall thereof. There is a circular recess eccentrically located in the plate of the lid and the disc is placed into this recess. During operation, the spinning means is driven by the knob and therefore rotation of the masher means is ensured.

### Summary of the Invention

The problem that this invention application aims to resolve is: targeting at the complexity in structure, the inconvenience in manufacturing, and the undesirable result of food processing, it provides a small food chopper that is simple in structure, easy to manufacture, and better in chopping food.

The technical solution of this invention is: to invent a small food chopper according to claim 1. It includes a food container, a blade assembly with cutting blades that is set in the said container and can spin, and a container cover assembly that is on top of the said container and cannot rotate relative to the container. The said container cover assembly has a top surface and a bottom surface. It also includes a rotating knob and a transmission mechanism. The said rotating knob intrudes out from the top surface of the said container cover assembly. When the rotating knob rotates against the said container cover assembly, it drives the transmission mechanism to make the said blade assembly spin. The unique character is that said rotating knob is at eccentric position of the said container cover assembly and is set on the top surface of the said container cover assembly and wherein said transmission mechanism is set on the bottom surface of the said container cover assembly.

In the small food chopper of this invention application, there are threads in the round inner surface of the said rotating knob. The said transmission mechanism includes a driving gear, a spinning gear, and a spinning shaft. The said driving gear is mounted on the bottom surface of the said container cover assembly, fitting into both the said threads and the spinning gear. The spinning gear is mounted on the said spinning shaft. The said spinning shaft extends outside the bottom surface of the said container cover assembly through the center hole of the said bottom surface of the said container cover assembly. The said spinning shaft is mounted to the said blade assembly.

In the small food chopper of this invention application, there are at least one first bulging thread inside the inner surface of the said container, extending from the top of the container to its bottom, to increase the resistance between the blades and the food.

In the small food chopper of this invention application, there are two notches on the outer surface of the said container, to help the user to hold the food chopper while using it.

In the small food chopper of this invention application, there are four first bulging threads on the inner surface of the said container. These said first bulging threads are grouped into two groups, and are symmetrically positioned based on the said notch.

In the small food chopper of this invention application, there is a first positioning column in the center inside of the said rotating knob. The end of the said first positioning column is split into several elastic strips by several axial cuttings. In the top surface of the said container cover assembly; there is a notch that fits into the said rotating knob and a first positioning hole that fits into the said first positioning column. The said rotating knob is mounted to the said notch on the top surface of the said container cover assembly by matching the elastic strips of the first positioning column into the said first positioning hole. There is a second positioning column on the bottom surface of the said container cover assembly. The said second positioning column passes through the central hole of the said driving gear to mount the said driving gear.

In the small food chopper of this invention application, there is a second hole in the center of the bottom surface of the said container cover assembly. The diameter of the said second hole on the said container side is larger than the diameter on the other side. The said spinning shaft has upper part and lower part that are assembled together. The lower part is a hexagon column. The upper part is a cylinder that has a diameter that fits into the diameter of the second hole on the container side. The cylinder also has a hexagon shaped second notch. The said spinning gear has a third positioning column bulging towards the container and fitting in the said second notch. The said spinning shaft, spinning gear, and the bottom surface of the said container cover assembly are fixed together using a screw bolt through the said third positioning column and the said second notch.

In the small food chopper of this invention application, the said blade assembly has a hexagon central axis and at least one fitting cap which is hollow, has the shape of the said central axis and fits into the said central axis. At the bottom of the said central axis there is a step extension which is larger than the axis. To one side of said blade assembly there is a fitting hole that has the same shape of the said central axis and can be fixed to the said central axis by the said fitting cap between the step extension of the said central axis and the said fitting cap. The said central axis is mounted to the said fitting cap via the screw bolt that passes through the said fitting cap and fixed to the said central axis.

In the small food chopper of this invention application, the said blade assembly has first blade and second blade. The said fitting cap has first fitting cap and second fitting cap. The said first blade is fixed between the first fitting cap and the said step extension. The said second blade is fixed between the first fitting cap and the second fitting cap. The said first blade and second blade are mounted on the opposite positions of the said central axis.

In the small food chopper of this invention application, there is a fourth positioning column on the center of the bottom of the said container, pointing towards the said container cover assembly. In the center of the bottom of the said central axis there is a third notch. The said fourth positioning column and said third notch matches each other so that the said central axis will not move when spinning.

The small food chopper of this invention application has the following benefits: Since the rotating knob has a different center than the container cover assembly, when using a larger driving ratio, the unit has a simpler structure and is easier to manufacture. The notch outside the container makes the small food chopper easier to handle. The first bulging thread increases the resistance between the food and the blades, making it easier to chop the food.

### Brief Description of the Figures

Figure-1 is the structural illustration of the small food chopper.
Figure-2 is the section view of the rotating knob of the small food chopper.
Figure-3 is the top view of the container cover assembly of the small food chopper.
Figure-4 is the section view of the container and the blade assembly of the small food chopper.

### Detailed Description of the Invention

As illustrated in Figure-1, the small food chopper of this invention includes container (1), container cover assembly (2) which includes container cover assembly top surface (21) and container cover assembly bottom surface (22) and the transmission mechanism (4) that is between them, rotating knob (3) that is set on the container cover assembly top surface (21), and blade assembly (5). On the inner surface of container (1), there are 4 first bulging threads (11) that follow the axial direction of the container (1) (i.e., the said first bulging thread runs from the top of the container (1) to its bottom on the inner surface). Said first bulging thread (11) is used to increase the resistance between the blades and the food when the small food chopper processes food, therefore to improve the effectiveness of cutting the food. As the same time, on the exterior of container (1), there are two notches (12). These two notches are for the users to hold when using this small food chopper, so that the small food chopper can be securely controlled, and the user can easily rotate the said rotating knob (3). Besides, these two notches can also help the user to twist the rotating knob back and forth, so that to increase the speed of the food chopper. In this implementation, since these two said notches (12) are depressed into the container, and form a bulge on the inner surface of the container (1), they can also increase the resistance of food inside container (1). The said four first bulging threads (11) are grouped into two groups. Each group has two first bulging threads (11). The first bulging threads (11) of each group are positioned symmetrically against each other centered in a notch (12). That means on both sides of each notch (12) there is a first bulging threads (11).

In this implementation, there is a first positioning column (31) in the center of rotating knob (3), and extending to its inside. The said first positioning column (31) is split into several elastic positioning strips by at least one axial cutting on it. At the end of each elastic positioning strip this is an extension, as shown in Figure-2. On the container cover assembly top surface (21) there is a notch (211) that fits into the said rotating knob (3) and a first positioning hole (212) that fits into the said first positioning column (31). The said rotating knob (3) is mounted in the said notch (211) of the container cover assembly top surface (21) by matching the said elastic positioning strips in the first positioning column (31) and the said first positioning hole (212), as illustrated in Figure-3.

There is thread (32) on the inner surface of the said rotating knob (3), as illustrated in Figure-2. The said transmission mechanism (4) includes driving gear (41), spinning gear (42), and spinning shaft (45). There is a positioning hole at the center of the driving gear (41). The driving gear (41) is mounted on the second positioning column (221) on the said bottom surface (22) of the said container cover assembly (2) through the positioning hole, fitting into the said thread and the spinning gear (42). The said spinning gear (42) is fixed on the said spinning shaft (45). The said spinning shaft (45) goes through the hold in the center of the said bottom surface (22) of the said container cover assembly (2) and is fixed to the said blade assembly (5).

There is a second positioning hole (222) at the center of the said bottom surface (22) of the said container cover assembly (2). The diameter of the said second hole (222) on the container 1's side is larger than the diameter on the other side. The said spinning shaft (45) has an upper part and a lower part that are fixed together. The lower part is a hexagon column (44). The upper part is a cylinder (43) that matches into the diameter of the said second positioning hole (222) on the container 1's side. The said cylinder (43) also has a hexagon second notch (431). The said spinning gear (42) has a third positioning column (421) which outstretches to the said container (1) and matches into the said second notch (431). The said spinning shaft (45), spinning gear (42) and the container cover assembly top surface (21) are mounted together using a screw bolt that is fixed to the said third positioning column (421) and second notch (431).

In this implementation, the blade assembly (5) includes a hexagon column central axis (53), two fitting caps (first fitting cap (52) and second fitting cap (51)), first blade (54), and second blade (55). The two fitting caps are hollow. Their center holes have the same shape as the shape of the said central axis (53) and can be fit onto the said central axis (53). At the bottom of the central axis (53) there is a step extension (531) that is larger than the column of the central axis (53). At one side of the first blade (54) and second blade (55) there are fitting holes that has the same shape of said central axis (53). They are mounted to the said central axis (53) by putting these holes in the said central axis (53). The first blade (54) is mounted between the said first fitting cap (52) and the said step extension (531) of said central axis (53). The second blade (55) is mounted between the first fitting cap (52) and the second fitting cap (51). The said first blade (54) and second blade (5) are positioned to the opposite of each other on the said central axis (53). The said second fitting cap (52) is fixed to the said central axis (53) through a screw bolt that runs through the top of the said second fitting cap (52) and connects into the said central axis (53).

In this implementation, there is a fourth positioning column (13) at the center of the bottom of the container (1). It outstretches to the said container cover assembly. There is a third notch (532) at the center of the bottom of said central axis (53). The said fourth positioning column (13) and third notch (532) fit into each other so that the said central axis (53) will not move when spinning. Please refer to Figure-4 for detailed structure.

In this implementation, when the user places food into the container (1), cover the cover set, and start spinning the rotating knob (3), the rotating knob (3) will drive the driving gear (41) through the threads on its inner surface. The driving gear (41) will then drive spinning gear (42) and spinning shaft (45) to spin. Since spinning shaft (45) stretches out of the container cover assembly bottom surface (22) and is fixed to the blade assembly (5), it will drive the blade assembly (5) to chop the food inside the container (1). Because of the first bulging thread (11) and notch (12), the resistance for food in the container (1) is increased. At the same time, said fourth positioning column (13) and third notch (532) prevent the blade assembly (5) from moving around when spinning. Thus the effectiveness of food chopping is improved. Notch (12) makes the usage even easier and increases the speed of food chopping.

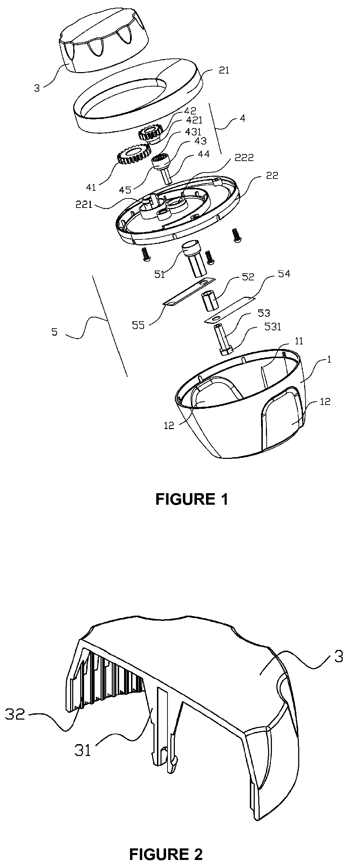

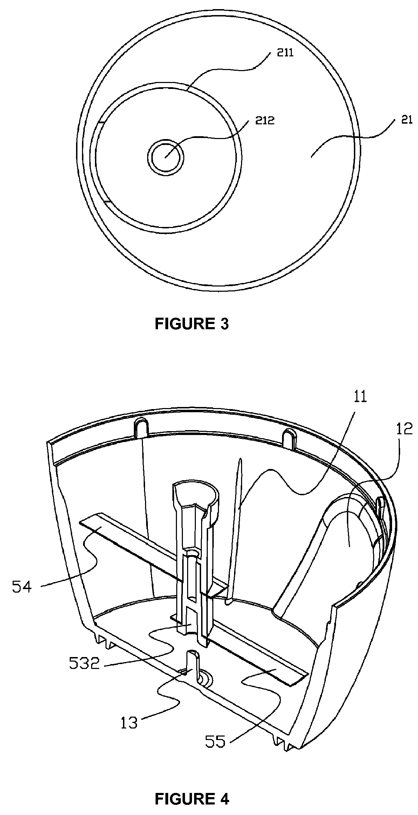

## Claims

1. A small food chopper, comprising a food container (1), a blade assembly (5) with cutting blades (54, 55) that is set in the said container (1) and can spin, and a container cover assembly (2) that is on top of the said container (1) and cannot rotate relative to the container (1), said container cover assembly (2) has a top surface (21) and a bottom surface (22), further comprising a rotating knob (3) and a transmission mechanism (4), said rotating knob (3) intrudes out from the top surface (21) of the said container cover assembly (2) wherein when the rotating knob (3) is configured to rotate against the said container cover assembly (2) and drive the transmission mechanism (4) to make the said blade assembly (5) spin, wherein said rotating knob (3) is at eccentric position of the said container cover assembly (2) and is set on the top surface (21) of the said container cover assembly (2) and wherein said transmission mechanism (4) is set on the bottom surface (22) of the said container cover assembly (2), wherein the food chopper further comprises threads (32) in the round inner surface of the said rotating knob (3), wherein the said transmission mechanism (4) includes a driving gear (41), a spinning gear (42), and a spinning shaft (45), said driving gear (41) is set on the bottom surface (22) of the said container cover assembly (2), fitting into both said threads (32) and the spinning gear (42), the spinning gear (42) is mounted on the said spinning shaft (45), said spinning shaft (45) extends outside the bottom surface (22) of the said container cover assembly (2) through a second hole (222) in the center of the said bottom surface (22) of the said container cover assembly (2) and wherein said spinning shaft (45) is mounted to the said blade assembly (5), wherein there is a first positioning column (31) in the center inside of the said rotating knob (3), and
wherein in the top surface (21) of the said container cover assembly (2), there is a notch (211) that fits into the said rotating knob (3) and a first positioning hole (212) that is deposited on said top surface (21) and fits into the said first positioning column (31), **characterized in that**
end of the said first positioning column (31) is split into several elastic strips by several axial cuttings, and said rotating knob (3) is mounted to the said notch (211) on the top surface (21) of the said container cover assembly (2) by matching the elastic strips of the first positioning column (31) into the said first positioning hole (212).

2. The small food chopper of claim 1 having at least one first bulging thread (11) inside the inner surface of the said container (1), extending from the top of the container (1) to its bottom, to increase the resistance between the blades (54, 55) and the food.

3. The small food chopper of claim 2 wherein there are two notches (12) on the outer surface of the said container (1), to help the user to hold the food chopper while using it.

4. The small food chopper of claim 3 wherein there are four first bulging threads (11) on the inner surface of the said container (1), wherein said first bulging threads (11) are grouped into two groups and are symmetrically positioned based on the said notch (12).

5. The small food chopper of claim 4 wherein there is a second positioning column (221) on the bottom surface of the said container cover assembly (2), said second positioning column (221) passes through a central hole of the said driving gear (41) to mount the said driving gear (41).

6. The small food chopper of claim 5 wherein the diameter of the said second hole (222) in the center of the bottom surface (22) on said container (1) side is larger than the diameter on the other side, said spinning shaft (45) has upper part and lower part that are assembled together, the lower part is a hexagon column (44), the upper part is a cylinder (43) that has a diameter that fits into the diameter of said hole (222) in the center of the bottom surface (22) on the container (1) side, the cylinder (43) also has a hexagon shaped second notch (431), said spinning gear (42) has a third positioning column (421) bulging towards the container (1) and fitting in the said second notch (431), said spinning shaft (45), spinning gear(42), and the bottom surface (22) of the said container cover assembly (2) are fixed together using a screw bolt through the said third positioning column (421) and the said second notch (431).

7. The small food chopper of Claim 6 wherein said blade assembly (5) has a hexagon central axis (53) and at least one fitting cap (51, 52) which is hollow, has the shape of said central axis (53) and fits into the said central axis (53), wherein at the bottom of the said central axis (53) there is a step extension (531) which is larger than the axis (53), to one side of the said blade assembly (5) there is a fitting hole that has the same shape of the said central axis (53) and can be fixed to said central axis (53) by the said fitting cap (51, 52) between the step extension (531) of the said central axis (53) and said fitting cap (51, 52), said central axis (53) is mounted to the said fitting cap (51, 52) via the screw bolt that passes through the said fitting cap (51, 52) and fixed to the said central axis (53).

8. The small food chopper of Claim 7 wherein the said blade assembly (5) has a first blade (54) and a second blade (55), said fitting cap (51, 52) has a first fitting cap (52) and a second fitting cap (51), said first blade (54) is fixed between the first fitting cap (52) and the said step extension (531). The said second blade (55) is fixed between the first fitting cap (52) and the second fitting cap (51) and the said first blade (54) and second blade (55) are mounted on the opposite positions of the said central axis (53).

9. The small food chopper of any of Claim 6 to 8 wherein there is a fourth positioning column (13) on the center of the bottom of the said container (1), pointing towards the said container cover assembly (2), in the center of the bottom of the said central axis (53) there is a third notch (532), said fourth positioning column (13) and said third notch (532) matches each other so that the said central axis will not move when spinning.

## Patentansprüche

1. **Kleiner Lebensmittelzerkleinerer** (food chopper) mit einem
Lebensmittelbehälter (1), einer Klingenanordnung (5) mit Schneidklingen (54, 55), die in dem Behälter (1) angeordnet ist und drehbar ist, und einer Behälterabdeckungsanordnung (2), die oben auf dem Behälter (1) angeordnet ist und die relativ zu dem Behälter (1) nicht drehbar ist,
wobei die Behälterabdeckungsanordnung (2) mit einer oberen Oberfläche (21) und einer unteren Oberfläche (22) einen Drehknopf (3) und einen Transmissionsmechanismus (4) umfasst,
wobei der Drehknopf (3) von der oberen Oberfläche (21) der Behälterabdeckungsanordnung (2) eindringt und der Drehknopf (3) so ausgestaltet ist, gegen die Behälterabdeckungsanordnung (2) zu rotieren und den Transmissionsmechanismus (4) anzutreiben, um die Klingenanordnung (5) zu drehen, und wobei der Drehknopf (3) exzentrisch zu der Behälterabdeckungsanordnung (2) ist und an der oberen Oberfläche (21) der Behälterabdeckungsanordnung (2) angeordnet ist und wobei der Transmissionsmechanismus (4) an der unteren Oberfläche (22) der Behälterabdeckungsanordnung (2) angeordnet ist;
wobei der Lebensmittelzerkleinerer eine Steg-Nut-Folge (32) in der runden Oberfläche des Drehknopfes (3) umfasst,
wobei der Transmissionsmechanismus (4) ein Antriebszahnrad (41), ein Abtriebszahnrad (42) und eine drehbare Welle (45) umfasst,
wobei das Antriebszahnrad (41) an der unteren Oberfläche (22) der Behälterabdeckungsanordnung (2) in die Steg-Nut-Folge (32) und das Abtriebszahnrad (42) passend angeordnet ist,
wobei das Abtriebszahnrad (42) an der drehbaren Welle (45) montiert ist,
wobei sich die drehbare Welle (45) außerhalb der unteren Oberfläche (22) der Behälterabdeckungsanordnung (2) durch ein zweites Loch (222) in der Mitte der unteren Oberfläche (22) der Behälterabdeckungsanordnung (2) erstreckt und wobei die drehbare Welle (45) an der Klingenanordnung (5) montiert ist, wobei der Drehknopf (3) innen mittig einen ersten Positionierungsstab (31) aufweist, und
wobei die obere Oberfläche (21) der Behälterabdeckungsanordnung (2) eine Vertiefung (211) aufweist, in die der Drehknopf (3) passt, und ein erstes Positionierungsloch (212) auf der oberen Oberfläche (21) aufweist, in das der erste Positionierungsstab (31) passt,
**dadurch gekennzeichnet, dass**
ein Ende des ersten Positionierungsstabs (31) durch mehrere axiale Spalte oder Schnitte in mehrere elastische Streifen aufgeteilt ist und der Drehknopf (3) in der Vertiefung (211) der oberen Oberfläche (21) der Behälterabdeckungsanordnung (2) durch Einpassen der elastischen Streifen des ersten Positionierungsstabs (31) in das erste Positionierungsloch (212) montiert ist.

2. Kleiner Lebensmittelzerkleinerer nach Anspruch 1 mit zumindest einer ersten sich aufweitenden Rippe (11) in der inneren Oberfläche des Behälters (1), die sich von der oberen Seite des Behälters (1) zu dessen unterer Seite erstreckt, um den Widerstand zwischen den Klingen (54, 55) und dem Lebensmittel zu erhöhen.

3. Kleiner Lebensmittelzerkleinerer nach Anspruch 2, wobei die äußere Oberfläche des Behälters (1) zwei Vertiefungen (12) aufweist, um den Verbraucher für das Halten des Lebensmittelzerkleinerers während dessen Verwendung zu unterstützen.

4. Kleiner Lebensmittelzerkleinerer nach Anspruch 3, wobei die innere Oberfläche des Behälters (1) vier erste sich aufweitende Rippen (11) aufweist, wobei die ersten sich aufweitenden Rippen (11) in zwei Gruppen gruppiert sind und symmetrisch, basierend auf der Vertiefung (12), angeordnet sind.

5. Kleiner Lebensmittelzerkleinerer nach Anspruch 4, wobei die untere Oberfläche der Behälterabdeckungsanordnung (2) einen zweiten Positionierungsstab (221) aufweist, wobei der zweite Positionierungsstab (221) durch ein mittiges Loch des Antriebszahnrads (41) zum Montieren des Antriebszahnrads (41) greift.

6. Kleiner Lebensmittelzerkleinerer nach Anspruch 5, wobei der Durchmesser des zweiten Lochs (222) in der Mitte der unteren Oberfläche (22) auf der Seite des Behälters (1) größer ist als der Durchmesser auf der anderen Seite, wobei die drehbare Welle (45) einen oberen Abschnitt und einen unteren Abschnitt aufweist, die miteinander montiert sind, wobei der untere Abschnitt ein hexagonaler Stab (44) ist und der obere Abschnitt ein Zylinder (43) mit einem solchen Durchmesser ist, dass dieser in den Durchmesser des Lochs (222) in der Mitte der unteren Oberfläche (22) der Seite des Behälters (1) passt, wobei der Zylinder (43) eine zweite Vertiefung (431) in hexagonaler Form aufweist,
wobei das Abtriebszahnrad (42) einen dritten Positionierungsstab (421) aufweist, der sich in Richtung des Behälters (1) wölbt und in die zweite Vertiefung (431) passt, wobei die drehbare Welle (45), das Abtriebszahnrad (42) und die untere Oberfläche (22) der Behälterabdeckungsanordnung (2) miteinander über einen Schraubenbolzen durch den dritten Positionierungsstab (421) und die zweite Vertiefung (431) verbunden sind.

7. Kleiner Lebensmittelzerkleinerer nach Anspruch 6, wobei die Klingenanordnung (5) eine hexagonale Zentralachse (53) und zumindest eine hohle Abdeckkappe (51, 52) aufweist, die Form der Zentralachse (53) aufweist und in die Zentralachse (53) passt, wobei sich am Unterteil der Zentralachse (53) eine stufenförmige Ausdehnung (531) befindet, die größer ist als die Achse (53), wobei eine Seite der Klingenanordnung (5) ein Passloch aufweist, das die Form der Zentralachse (53) aufweist und an die Zentralachse (53) durch die Abdeckkappe (51, 52) zwischen der stufenförmigen Ausdehnung (531) der Zentralachse (53) und der Abdeckkappe (51, 52) verbindbar ist, wobei die Zentralachse (53) mit der Abdeckkappe (51, 52) über den Schraubbolzen montiert ist, der durch die Abdeckkappe (51, 52) greift und mit der Zentralachse (53) verbunden ist.

8. Kleiner Lebensmittelzerkleinerer nach Anspruch 7, wobei die Klingenanordnung (5) eine erste Klinge (54) und eine zweite Klinge (55) aufweist und die Abdeckkappe (51, 52) eine erste Abdeckkappe (52) und eine zweite Abdeckkappe (51) aufweist, wobei die erste Klinge (54) zwischen der ersten Abdeckkappe (52) und der stufenförmigen Ausdehnung (531) verbunden ist und die zweite Klinge (55) zwischen der ersten Abdeckkappe (52) und der zweiten Abdeckkappe (51) verbunden ist, und die erste Klinge (54) und die zweite Klinge (55) an sich gegenüberliegenden Positionen der Zentralachse (53) montiert sind.

9. Kleiner Lebensmittelzerkleinerer nach einem der Ansprüche 6 bis 8, wobei das Unterteil des Behälters (1) einen vierten Zapfen oder Positionierungsstab (13) aufweist, der zur Behälterabdeckungsanordnung (2) gerichtet ist, wobei die Zentralachse (53) unten mittig eine dritte Vertiefung (532) aufweist, und wobei der vierte Zapfen oder Positionierungsstab (13) und die dritte Vertiefung (532) so aufeinander abgestimmt sind, dass sich die Zentralachse während einer Drehung nicht verlagert.

## Revendications

1. Petit hachoir pour aliments, comprenant un contenant d'aliments (1), un ensemble de lames (5) avec des lames de coupe (54, 55) qui est placé dans ledit contenant (1) et peut tourner, et un ensemble de couvercle de contenant (2) qui est sur le dessus dudit contenant (1) et ne peut pas tourner par rapport au contenant (1), ledit ensemble de couvercle de contenant (2) présente une surface supérieure (21) et une surface inférieure (22), comprenant en outre un bouton rotatif (3) et un mécanisme de transmission (4), ledit bouton rotatif (3) dépasse de la surface supérieure (21) dudit ensemble de couvercle de contenant (2), dans lequel lorsque le bouton rotatif (3) est configuré pour tourner contre ledit ensemble de couvercle de contenant (2) et entraîner le mécanisme de transmission (4) pour amener ledit ensemble de lames (5) à tourner, dans lequel ledit bouton rotatif (3) est dans une position excentrée dudit ensemble de couvercle de contenant (2) et est placé sur la surface supérieure (21) dudit ensemble de couvercle de contenant (2) et dans lequel ledit mécanisme de transmission (4) est placé sur la surface inférieure (22) dudit ensemble de couvercle de contenant (2), dans lequel le hachoir d'aliments comprend en outre des filets (32) dans la surface intérieure ronde dudit bouton rotatif (3), dans lequel ledit mécanisme de transmission (4) inclut un engrenage menant (41), un engrenage tournant (42) et un arbre tournant (45), ledit engrenage menant (41) est placé sur la surface inférieure (22) dudit ensemble de couvercle de contenant (2), s'ajustant à la fois dans lesdits filets (32) et l'engrenage tournant (42), l'engrenage tournant (42) est monté sur ledit arbre tournant (45), ledit arbre tournant (45) s'étend à l'extérieur de la surface inférieure (22) dudit ensemble de couvercle de contenant (2) par un second trou (222) au centre de ladite surface inférieure (22) dudit ensemble de couvercle de contenant (2) et dans lequel ledit arbre tournant (45) est monté sur ledit ensemble de lames (5), dans lequel il y a une première colonne de positionnement (31) au centre à l'intérieur dudit bouton rotatif (3) et
dans lequel dans la surface supérieure (21) dudit ensemble de couvercle de contenant (2), il y a une encoche (211) qui s'ajuste dans ledit bouton rotatif (3) et un premier trou de positionnement (212) qui est déposé sur ladite surface supérieure (21) et s'ajuste dans ladite première colonne de positionnement (31), **caractérisé en ce que** l'extrémité de ladite première colonne de positionnement (31) est divisée en plusieurs bandes élastiques par plusieurs coupes axiales et ledit bouton rotatif (3) est monté sur ladite encoche (211) sur la surface supérieure (21) dudit ensemble de couvercle de contenant (2) par correspondance des bandes élastiques de la première colonne de positionnement (31) dans ledit premier trou de positionnement (212).

2. Petit hachoir pour aliments selon la revendication 1 présentant au moins un premier filet saillant (11) à l'intérieur de la surface intérieure dudit contenant (1) s'étendant du dessus du contenant (1) jusqu'à son dessous pour augmenter la résistance entre les lames (54, 55) et les aliments.

3. Petit hachoir pour aliments selon la revendication 2, dans lequel il y a deux encoches (12) sur la surface extérieure dudit contenant (1) pour aider l'utilisateur à tenir le hachoir pour aliments tout en l'utilisant.

4. Petit hachoir pour aliments selon la revendication 3, dans lequel il y a quatre premiers filets saillants (11) sur la surface intérieure dudit contenant (1), dans lequel lesdits premiers filets saillants (11) sont réunis en deux groupes et sont positionnés symétriquement sur la base de ladite encoche (12).

5. Petit hachoir pour aliments selon la revendication 4, dans lequel il y a une seconde colonne de positionnement (221) sur la surface inférieure dudit ensemble de couvercle de contenant (2), ladite seconde colonne de positionnement (221) passe par un trou central dudit engrenage menant (41) pour monter ledit engrenage menant (41).

6. Petit hachoir pour aliments selon la revendication 5, dans lequel le diamètre dudit second trou (222) au centre de la surface inférieure (22) sur le côté dudit contenant (1) est plus grand que le diamètre sur l'autre côté, ledit arbre tournant (45) présente une partie supérieure et une partie inférieure qui sont assemblées ensemble, la partie inférieure est une colonne hexagonale (44), la partie supérieure est un cylindre (43) qui présente un diamètre qui s'ajuste dans le diamètre dudit trou (222) au centre de la surface inférieure (22) sur le côté du contenant (1), le cylindre (43) a aussi une seconde encoche hexagonale (431), ledit engrenage tournant (42) présente une troisième colonne de positionnement (421) en saillie vers le contenant (1) et s'ajustant dans ladite seconde encoche (431), ledit arbre tournant (45), ledit engrenage tournant (42) et la surface inférieure (22) dudit ensemble de couvercle de contenant (2) sont fixés ensemble en utilisant un boulon fileté par ladite troisième colonne de positionnement (421) et ladite seconde encoche (431).

7. Petit hachoir pour aliments selon la revendication 6, dans lequel ledit ensemble de lames (5) présente un axe central hexagonal (53) et au moins un bouchon d'ajustement (51, 52) qui est creux, présente la forme dudit axe central (53) et s'ajuste dans ledit axe central (53), dans lequel au dessous dudit axe central (53), il y a une extension étagée (531) qui est plus grande que l'axe (53), vers un côté dudit ensemble de lames (5), il y a un trou d'ajustement qui présente la même forme dudit axe central (53) et peut être fixé audit axe central (53) par ledit bouchon d'ajustement (51, 52) entre l'extension étagée (531) dudit axe central (53) et ledit bouchon d'ajustement (51, 52), ledit axe central (53) est monté sur ledit bouchon d'ajustement (51, 52) via le boulon fileté qui passe par ledit bouchon d'ajustement (51, 52) et est fixé audit axe central (53).

8. Petit hachoir pour aliments selon la revendication 7, dans lequel ledit ensemble de lames (5) présente une première lame (54) et une seconde lame (55), ledit bouchon d'ajustement (51, 52) présente un premier bouchon d'ajustement (52) et un second bouchon d'ajustement (51), ladite première lame (54) est fixée entre le premier bouchon d'ajustement (52) et ladite extension étagée (531). La seconde lame (55) est fixée entre le premier bouchon d'ajustement (52) et le second bouchon d'ajustement (51) et ladite première lame (54) et ladite seconde lame (55) sont montées sur les positions opposées dudit axe central (53).

9. Petit hachoir pour aliments selon l'une quelconque des revendications 6 à 8, dans lequel il y a une quatrième colonne de positionnement (13) au centre du dessous dudit contenant (1) dirigée vers ledit ensemble de couvercle de contenant (2), au centre du dessous dudit axe central (53), il y a une troisième encoche (532), ladite quatrième colonne de positionnement (13) et ladite troisième encoche (532) se corresponde l'une à l'autre de sorte que ledit axe central ne se déplacera pas lors de la rotation.
